# EUROPÄISCHE PATENTSCHRIFT

(11) **EP 2 080 208 B1**
(45) Veröffentlichungstag und Bekanntmachung des Hinweises auf die Patenterteilung: **22.04.2015**
(21) Anmeldenummer: 07803318.0
(22) Anmeldetag: 07.09.2007
(51) Int. Cl.: H01H 19/58

(54) **ELEKTRISCHER SCHALTER, INSBESONDERE PARKSTELLUNGSSCHALTER FÜR EINEN SCHEIBENWISCHERMOTOR**
ELECTRIC SWITCH, PARTICULARLY PARK POSITION SWITCH FOR A WINDSHIELD WIPER MOTOR
COMMUTATEUR ÉLECTRIQUE, EN PARTICULIER COMMUTATEUR D'ARRÊT FIXE POUR UN MOTEUR D'ESSUIE-GLACE

(30) Priorität: 10.10.2006 DE 102006047931
(43) Veröffentlichungstag der Anmeldung: 22.07.2009
(73) Patentinhaber: Robert Bosch GmbH, 70442 Stuttgart (DE)
(72) Erfinder: LAUK, Detlef, 77871 Renchen (DE); PAULI, Stephan, 77855 Achern (DE)
(86) Internationale Anmeldenummer: PCT/EP2007/059364
(87) Internationale Veröffentlichungsnummer: WO 2008/043621

(56) Entgegenhaltungen:
- EP-A1- 0 533 052
- FR-A- 1 408 511
- FR-A1- 2 830 672

## Beschreibung

### Stand der Technik

Die Erfindung betrifft einen elektrischen Schalter, mit einer Schaltscheibe aus elektrisch leitendem Material, die auf einem um eine Drehachse drehbaren Träger aus nicht leitendem Material aufliegt, und mit wenigstens einem auf die Schaltscheibe gerichteten Schleifkontakt, wobei sich wenigstens einer der Schleifkontakte bei umlaufender Schaltscheibe abwechseln über elektrisch leitende und nicht leitende segmentartige Bereiche einer Umlaufbahn bewegt. Außerdem betrifft die Erfindung einen Wischerantrieb für ein Kraftfahrzeug mit einem solchen Schalter.

Ein derartiger Schalter sowie ein Scheibenwischermotor mit einem derartigen Schalter sind bereits aus der DE 41 30 972 C2, wie auch aus der FR 2830 672 A1, bekannt,

Elektrische Antriebsvorrichtungen für Scheibenwischer sind mit Schaltern versehen, die dafür sorgen, dass der Elektromotor der Antriebsvorrichtung auch nach Öffnen des Hauptschalters durch den Fahrer noch so lange mit Strom versorgt wird, bis der Scheibenwischer wieder in seine Ausgangsposition gelangt ist, die auch als Parkstellung bezeichnet wird. Dementsprechend wird der - allgemein zur Erkennung von Endpositionen eines sich periodisch innerhalb eines bestimmten Winkelbereichs hin- und herbewegende Elements (z.B. der Parkstellungsposition eines Wischers) geeignete - Schalter Parkstellungsschalter genannt.

Herkömmlicherweise werden die Parkstellungsschalter realisiert durch eine Schaltscheibe (Kontaktscheibe), die drei konzentrische abschnittsweise unterbrochene Kontaktbahnen aufweist, wobei auf jeder Bahn ein punktförmiges Kontaktelement (Schleifkontakt) umläuft, das eine elektrisch leitende Verbindung zur Kontaktbahn herstellt. Häufig sind die Kontaktbahnen bzw. die Schaltscheibe fest auf dem Abtriebszahnrad der Antriebswelle des Wischermotors angeordnet oder damit verbunden, während die Schleifkontakte gehäusefest, insbesondere am Getriebedeckel, ausgebildet sind.

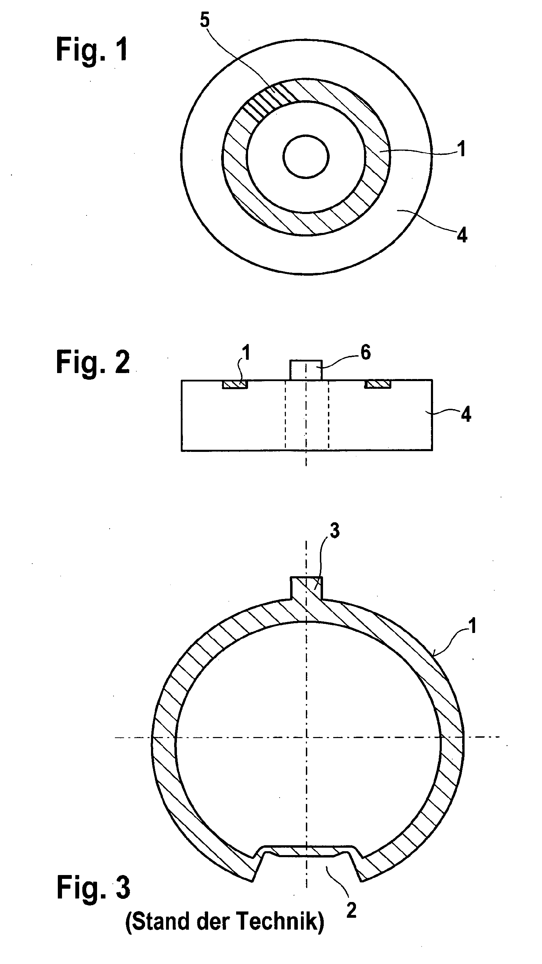

In Figur 3 ist die Schaltscheibe 1 eines gattungsgemäßen elektrischen Schalters dargestellt. Die bekannte Schaltscheibe 1 ist teilweise ringförmig ausgebildet, weist jedoch eine segmentartige Lücke bzw. Ausnehmung 2 und, gegenüberliegend, einen kurzen vorspringenden Sektor 3 auf. Ein für die innere Umlaufbahn vorgesehener (nicht dargestellter) Schleifkontakt bewegt sich also, außer im Bereich der Lücke 2, über dem Metallblech der Schaltscheibe 1, während ein für die äußere Umlaufbahn vorgesehener weiterer Schleifkontakt nur sehr kurz, nämlich über dem Sektor 3, auf der Schaltscheibe 1 läuft. Bei den bekannten Wischerantrieben werden auf dem abtreibenden Zahnrad Schaltscheiben aus leitendem Material auf die Oberseite des elektrisch nicht leitenden Kunststoffzahnrades eingelegt. Die Schleifkontakte laufen auf ihren jeweiligen Umlaufbahnen also abwechselnd über der Schaltscheibe und dem daran anschließenden Kunststoffmaterial des Trägers der Schaltscheibe und leiten dementsprechend ein Signal, wenn die Schleifer sich auf der leitenden Kontaktscheibe befinden, bzw. unterbrechen das Signal, wenn die Schleifkontakte auf dem Kunststoffzahnrad laufen. In der Regel wird dabei die Schaltscheibe in die Negativform der Zahnradoberseite gefügt.

Da die Schleifkontakte abwechselnd auf zwei Materialpartnern laufen, müssen diese zwei Teile (Kunststoffzahnrad und leitende Schaltscheibe) miteinander gepaart und verbunden werden und zwar so, dass nach dem Fügeprozess beide Teile - bezogen auf die Schleifkontakte - möglichst auf einer Ebene liegen. Bedingt durch Toleranzen ist dies nicht immer ideal zu erreichen. In der Folge kommt es zu einem erhöhten mechanischen Verschleiß der Kontakte, zu Klack-Geräuschen und zu Prellen, also zu einer verschlechterten Signalgüte. Darüber hinaus sind für jede neue Geometrie der Schaltscheibe oder bei verschiedenen Relativpositionen der Schaltscheibe zur Bohrung bzw. Einhängung des Umsetzgetriebes neben neuen Schaltscheiben auch neue Zahnradoberseiten mit entsprechenden Negativkonturen erforderlich, was mit einer aufwendigen Teilevielfalt und erhöhten Werkzeugkosten verbunden ist.

### Offenbarung der Erfindung

Der Erfindung liegt daher die Aufgabe zugrunde, einen verbesserten elektrischen Schalter der eingangs genannten Art zu schaffen. Diese Aufgabe wird erfindungsgemäß durch einen elektrischen Schalter gemäß Anspruch 1 sowie durch einen Wischerantrieb mit einem derartigen Schalter gelöst. Weiterbildungen und bevorzugte Maßnahmen ergeben sich aus den Unteransprüchen.

Erfindungsgemäß wird das genannte Ziel bei einem elektrischen Schalter der eingangs genannten Art dadurch erreicht, dass alle Schleifkontakte permanent auf der Schaltscheibe laufen, wobei die nicht leitenden segmentartigen Bereiche der Umlaufbahn durch eine auf entsprechende Bereiche der Schaltscheibe aufgetragene Isolation gebildet sind.

Die leitenden bzw. nicht leitenden Bereiche der Umlaufbahn werden demnach nicht mehr wie im Stand der Technik durch eine strukturierte Ausbildung der Schaltscheibe selbst, sondern durch Strukturierung der Oberfläche der Schaltscheibe mittels dort, in den entsprechenden Bereichen, aufgetragener Isolation realisiert. Das heißt, die typischerweise zwei oder drei Schleifer laufen alle und immer, also über die gesamten 360 Grad der Umlaufbahn auf der Schaltscheibe und nicht mehr, wie im Stand der Technik, abschnittsweise auch über den Träger der Schaltscheibe.

Dadurch resultiert zum einen eine Verringerung der Varianz, die sich nur noch auf ein Teil, nämlich die Schaltscheibe mit unterschiedlichen Isolationszonen/Codierungen, beschränkt. Die Codierung ist prozessbezogen, d.h. es sind keine unterschiedlichen Stanzwerkzeuge für die Herstellung der Varianten der Schaltscheibe erforderlich. Als besonders vorteilhaft wird angesehen, dass das Zahnrad als Träger der Schaltscheibe immer gleich und somit varianzunabhängig ausführbar ist. Dies führt zu reduzierten Kosten und einer schnelleren Umsetzung von neuen Codierungen. Hinsichtlich der Qualität ergibt sich der Vorteil, dass die zwei oder drei Schleifer, die erfindungsgemäß nur auf der Schaltscheibe, also auf einer Ebene laufen, nicht mehr von den Toleranzen des Systems Schaltscheibe/Träger abhängig sind. Damit resultiert ein verringerter Verschleiß/Abrieb, die Vermeidung von Klack-Geräuschen und Prellen, wodurch sich eine bessere Signalgüte ergibt.

Bei einer besonders vorteilhaften Ausführungsform der Erfindung ist die Isolation in den Bereichen, welche nicht leitend wirken dürfen, durch einen harten und elektrisch nicht leitenden Lack gebildet. Möglich ist stattdessen auch die Isolation durch eine Teflonbeschichtung.

Eine Ausführungsform, bei der die Schaltscheibe wenigstens annähernd die Form einer geschlossenen und lückenlosen Ringscheibe aufweist, ist - auch bei Ausstattung mit unterschiedlichen Codierungen - auf einfache Weise in eine gleichbleibende Negativform des Trägers einfügbar.

Der erfindungsgemäße Wischerantrieb für ein Kraftfahrzeug umfasst einen elektrischen Schalter, insbesondere einen Parkstellungsschalter, der oben beschriebenen Art.

### Kurze Beschreibung der Zeichnungen

Figur 1 zeigt eine schematische Draufsicht auf einen erfindungsgemäßen Schalter,
Figur 2 zeigt einen seitlichen Schnitt des Schalters gemäß Figur 1,
Figur 3 zeigt eine schematische Draufsicht auf einen aus dem Stand der Technik bekannten Schalter.

### Ausführungsform der Erfindung

In Figur 1 ist eine erfindungsgemäße Schaltscheibe 1 dargestellt, die annähernd die Form einer lückenlosen Ringscheibe aufweist und von einem Zahnrad 4 getragen wird. Ein harter nicht leitender Nano-Lack 5 ist auf dafür vorgesehenen Teilen der Oberfläche der Schaltscheibe 1 aufgebracht, wobei der Lackauftrag strukturiert erfolgt, so dass auf der durchgehenden Schaltscheibe 1 beispielsweise eine innere Umlaufbahn, die ein kurzes nicht leitendes Segment aufweist, eine durchgehende mittlere Umlaufbahn sowie eine äußere Umlaufbahn, die nur ein kurzes leitendes Segment aufweist, gebildet sind. Mittels des bereichs- bzw. segmentmäßig strukturierten Lackauftrages kann die jeweils gewünschte Codierung bzw. Schalterlogik auf einfache Weise realisiert werden. Selbstverständlich ist die Schaltscheibe auch als Vollscheibe ausführbar. Der Lackauftrag bzw. die Teflonbeschichtung weisen eine so geringe Dicke auf, dass die umlaufenden Schleifkontakte praktisch keinen Ebenenunterschied wahrnehmen. Wichtig ist, dass die aufgetragene Isolation über eine ausreichende Abriebfestigkeit verfügt.

Figur 2 zeigt eine Seitenansicht des Schalters, bei dem die lückenlose ringförmige Schaltscheibe 1 etwa 0,5 mm tief in die Oberseite des tragenden Zahnrades 4 eingelassen ist. Die entsprechende Negativform des auf der Abtriebswelle 6 aufsitzenden Zahnrades 4 ist unabhängig von der Codierung.

## Patentansprüche

1. Elektrischer Schalter, mit einer Schaltscheibe (1) aus elektrisch leitendem Material, die auf einem um eine Drehachse drehbaren Träger (4) aus nicht leitendem Material aufliegt, und mit wenigstens einem auf die Schaltscheibe (1) gerichteten Schleifkontakt, wobei sich wenigstens einer der Schleifkontakte bei umlaufender Schaltscheibe (1) abwechselnd über elektrisch leitende und nicht leitende segmentartige Bereiche (2, 3) einer Umlaufbahn bewegt,
**dadurch gekennzeichnet,**
**dass** alle Schleifkontakte permanent auf der Schaltscheibe (1) laufen, wobei die nicht leitenden segmentartigen Bereiche (3) der Umlaufbahn durch eine auf entsprechende Bereiche der Schaltscheibe (1) aufgetragene Isolation (5) gebildet sind.

2. Elektrischer Schalter nach Anspruch 1, **dadurch gekennzeichnet, dass** die Isolation (5) durch einen harten und elektrisch nicht leitenden Lack gebildet ist.

3. Elektrischer Schalter nach Anspruch 1, **dadurch gekennzeichnet, dass** die Isolation (5) durch eine Teflonbeschichtung gebildet ist.

4. Elektrischer Schalter nach einem der Ansprüche 1 bis 3,
**dadurch gekennzeichnet, dass** zwei oder drei Schleifkontakte vorgesehen und jeweils auf eine der konzentrisch zur Drehachse der Schaltscheibe (1) angeordneten Umlaufbahnen ausgerichtet sind.

5. Elektrischer Schalter nach einem der Ansprüche 1 bis 4, **dadurch gekennzeichnet, dass** die Schaltscheibe (1) wenigstens annähernd die Form einer geschlossenen und lückenlosen Ringscheibe aufweist.

6. Wischerantrieb für ein Kraftfahrzeug mit einem elektrischen Schalter, insbesondere einem Parkstellungsschalter, nach einem der Ansprüche 1 bis 5.

## Claims

1. Electrical switch, comprising a switching disc (1) which is composed of an electrically conductive material and rests on a carrier (4) which can be rotated about a rotation axis and is composed of a non-conductive material, and comprising at least one sliding contact which is directed towards the switching disc (1), wherein at least one of the sliding contacts moves alternately across electrically conductive and non-conductive segment-like regions (2, 3) of a circular path when the switching disc (1) is rotated, **characterized in that** all of the sliding contacts run permanently on the switching disc (1), wherein the non-conductive segment-like regions (3) of the circular path are formed by an insulation (5) which is applied to corresponding regions of the switching disc (1).

2. Electrical switch according to Claim 1, **characterized in that** the insulation (5) is formed by a hard and electrically non-conductive coat.

3. Electrical switch according to Claim 1, **characterized in that** the insulation (5) is formed by a Teflon coating.

4. Electrical switch according to one of Claims 1 to 3, **characterized in that** two or three sliding contacts are provided and are oriented in each case towards one of the circular paths which are arranged concentrically with respect to the rotation axis of the switching disc (1).

5. Electrical switch according to one of Claims 1 to 4, **characterized in that** the switching disc (1) has, at least approximately, the shape of a closed and continuous annular disc.

6. Wiper drive for a motor vehicle having an electrical switch, in particular a park position switch, according to one of Claims 1 to 5.

## Revendications

1. Commutateur électrique, comprenant une rondelle de commutateur (1) constituée d'un matériau conducteur électrique, qui s'applique sur un support (4) en matériau non conducteur pouvant tourner autour d'un axe de rotation, et comprenant au moins un contact frottant orienté vers la rondelle de commutateur (1), au moins l'un des contacts frottants se déplaçant, lorsque la rondelle de commutateur (1) tourne, en alternance sur des plages de type segments (2, 3) électriquement conductrices et non conductrices d'une trajectoire périphérique,
**caractérisé en ce que**
tous les contacts frottants glissent en permanence sur la rondelle de commutateur (1), les plages non conductrices de type segments (3) de la trajectoire périphérique étant formées par une isolation (5) appliquée sur des plages correspondantes de la rondelle de commutateur (1).

2. Commutateur électrique selon la revendication 1, **caractérisé en ce que** l'isolation (5) est formée par un vernis dur et non conducteur électrique.

3. Commutateur électrique selon la revendication 1, **caractérisé en ce que** l'isolation (5) est formée par un revêtement en téflon.

4. Commutateur électrique selon l'une quelconque des revendications 1 à 3, **caractérisé en ce que** deux ou trois contacts frottants sont prévus et sont orientés à chaque fois sur l'une des trajectoires périphériques disposées concentriquement par rapport à l'axe de rotation de la rondelle de commutateur (1).

5. Commutateur électrique selon l'une quelconque des revendications 1 à 4, **caractérisé en ce que** la rondelle de commutateur (1) présente au moins approximativement la forme d'une rondelle annulaire fermée et sans espace.

6. Entraînement d'essuie-glace pour un véhicule automobile comprenant un commutateur électrique, en particulier un commutateur de position de stationnement, selon l'une quelconque des revendications 1 à 5.
